# EUROPÄISCHE PATENTSCHRIFT

(11) **EP 1 563 587 B1**
(45) Veröffentlichungstag und Bekanntmachung des Hinweises auf die Patenterteilung: **01.04.2009**
(21) Anmeldenummer: 03778259.6
(22) Anmeldetag: 06.11.2003
(51) Int. Cl.: H02K 21/24, H02K 5/15, H02K 7/116, H02K 1/18, H02K 5/167

(54) **ANTRIEBSVORRICHTUNG FÜR VERSTELLEINRICHTUNGEN IN KRAFTFAHRZEUGEN**
DRIVE DEVICE PROVIDED FOR OPERATING ADJUSTING DEVICES IN MOTOR VEHICLES
DISPOSITIF D'ENTRAINEMENT POUR DISPOSITIFS DE REGLAGE DE VEHICULES AUTOMOBILES

(30) Priorität: 07.11.2002 DE 10253071
(43) Veröffentlichungstag der Anmeldung: 17.08.2005
(73) Patentinhaber: Brose Fahrzeugteile GmbH & Co. KG, Coburg, 96450 Coburg (DE)
(72) Erfinder: KLIPPERT, Uwe, 96472 Coburg (DE)
(74) Vertreter: Ninnemann, Detlef
(86) Internationale Anmeldenummer: PCT/DE2003/003735
(87) Internationale Veröffentlichungsnummer: WO 2004/042900

(56) Entgegenhaltungen:
- WO-A-00/31859
- DE-A- 10 118 128
- US-B1- 6 232 690
- PATENT ABSTRACTS OF JAPAN vol. 014, no. 515 (E-1000), 13. November 1990 (1990-11-13) -& JP 02 214453 A (CANON ELECTRON INC), 27. August 1990 (1990-08-27)

## Beschreibung

Die Erfindung bezieht sich auf eine Antriebsvorrichtung für Verstelleinrichtungen in Kraftfahrzeugen gemäß dem Oberbegriff des Anspruchs 1.

Die Erfindung bezieht sich auf eine Antriebsvorrichtung für Verstelleinrichtungen in Kraftfahrzeugen gemäß dem Oberbegriff des Anspruchs 1.

Aus der WO 00/31859 ist ein kleiner, flacher, tragbarer Generator mit einer Vielzahl kreisförmiger Magnetplatten mit Nord- und Südpolen mit abwechselnder Magnetisierungsrichtung bekannt, die durch zueinander beabstandete Öffnungen in einer kreisförmigen Kunststoffplatte gesteckt sind und eine kreisförmige Magnetplattenanordnung ergeben. Den beiden Seiten der kreisförmigen Magnetplattenanordnung stehen in geeignetem Abstand Magnetspulenplatten gegenüber, auf die miteinander verbundene Magnetspulen aufgeklebt und die an die Ausgangsklemmen eines Gleichrichters angeschlossen sind. Die Magnetspulenplatten sind auf einer Montageplatte befestigt und weisen eine mittige Bohrung auf, durch die eine mit der kreisförmigen Magnetplattenanordnung verbundene Welle gesteckt ist, an deren Ende ein Ritzel angeordnet ist, das mit auf der Montageplatte angeordneten Zahnrädern kämmt, die mit einem Federaufzugsmechanismus zum Antrieb des Generators verbunden sind.

Weiter: 2. Absatz auf Seite 1 der WO 2004/DE2003/003735

Aus der WO 00/48 294 ist eine als Axialfeldmotor oder -generator ausgebildete elektrische Maschine mit einem in einem Gehäuse drehbar gelagerten Rotor und mit aus dem Gehäuse herausgeführter Rotorwelle bekannt. Ortsfest im Gehäuse sind eine Vielzahl von Elektromagnet-Bauelemente mit Abstand von der Rotorwellen-Drehachse in gleichmäßigen Winkelabständen angeordnet, die jeweils einen eine Spulenwicklung aus einem oder mehreren Leitern tragenden Spulenkern aufweisen. Die Polflächen der Stirnseiten der Spulenkerne sind zu den Polflächen von drehfest im oder am Rotor angeordneten Permanentmagneten ausgerichtet, die in Umfangsrichtung aufeinanderfolgend jeweils eine entgegengesetzte Polarität aufweisen. Die Spulenkerne der Elektromagnet-Bauelemente sind parallel zur Drehachse der Rotorwelle im Gehäuseinnern angeordnet, so dass ihre gegenüberliegenden Stirnseiten jeweils in zwei voneinander beabstandeten, rechtwinklig zur Rotorwellen-Drehachse verlaufenden Ebenen liegen.

Die Verbindung der scheibenförmigen Rotoren mit der Rotorwelle und deren Lagerung im Gehäuse der elektrischen Maschine bedingt, dass zur Prüfung und Betätigung die Rotoren und der Stator vollständig im Gehäuse angeordnet bzw. montiert sein müssen. Die Abstützung und Lagerung der Rotorwelle an zwei Gehäuseseiten erfordert jedoch eine exakte Abstimmung zwischen dem Abstand der Abstützstellen am Gehäuse und dem Höhenaufbau des Stators und den scheibenförmigen Rotoren, da infolge der axia-len Abstützung der Rotorwelle die Gefahr einer Überbestimmung der Lagerung und infolge davon hohe Reibungsverluste resultieren.

Ein weiteres Problem besteht in der Einhaltung der beiden sehr wichtigen Luftspalte zu den Läuferscheiben. Diese Abstimmung erfordert ein exaktes Einmessen beispielsweise unter Verwendung von Passscheiben, wenn zwischen den Läuferscheiben mehrere Teile angeordnet sind, deren Toleranzen berücksichtigt werden müssen.

Der Erfindung liegt die Aufgabenstellung zugrunde, eine Antriebsvorrichtung aus einem Axialfeldmotor und einem Getriebe zu schaffen, bei der der Axialfeldmotor auch ohne Motorgehäuse funktionsfähig und in seinen wesentlichen Eigenschaften vorprüfbar ist, dessen Aufbau Überbestimmungen und damit hohe Reibungsverluste oder eine aufwendige Dimensionierung ausschließt, kein exaktes Einmessen zur Einhaltung der Luftspalte zu den Läuferscheiben erfordert und der eine Verbindung mit einem selbsthemmenden oder nicht selbsthemmenden Getriebe ermöglicht, und die eine flache, raumsparende Bauweise ermöglicht.

Diese Aufgabenstellung wird erfindungsgemäß durch die Merkmale des Anspruchs 1 gelöst.

Die erfindungsgemäße Lösung stellt einen Axialfeldmotor bereit, der auch ohne Motorgehäuse lauffähig und damit in seinen wesentlichen Eigenschaften vorprüfbar ist und dessen konstruktiver Aufbau Überbestimmungen und damit hohe Reibungsverluste oder eine aufwendige Überdimensionierung ausschließt. Da die von der Motorwelle ausgehenden radialen Kräfte über sich axial erstreckende Formschlussbereiche radialer Stege in das Gehäuse der Antriebsvorrichtung oder des Axialfeldmotors eingeleitet werden, sind in axialer Richtung keine Teile mit ihren Toleranzen zur Lagerung der Motorwelle erforderlich, so dass kein Einmessen mit dünnen Paßscheiben oder dergleichen notwendig ist. Die Einhaltung der Luftspalte hängt beispielsweise nur von einer Abstimmung der Motorwelle und einer am Umfang des Axialfeldmotors abgestützten Lagerbuchse zur Aufnahme der Motorwelle ab. Die Bauweise des Axialfeldmotors ermöglicht die Verbindung mit unterschiedlichen Getriebeformen und durch die Integration von Selbsthemmungseigenschaften in den Axialfeldmotor eine Verbindung mit selbsthemmenden oder nicht selbsthemmenden Getrieben.

Die Integration der Motorwelle in den Axialfeldmotor ermöglicht weiterhin eine äußerst flache Bauweise sowie durch die Anbindung des Getriebes an den Axialfeldmotor eine sehr kompakte Bauform der Antriebsvorrichtung.

Das erfindungsgemäße Konzept zur Lagerung der Motorwelle schafft mit deren umfangsseitiger Abstützung mit strahlenförmig zum Zentrum des Axialfeldmotors weisenden Stegen eine virtuelle Motorachse, so dass keine axiale Abstützung der Motorwelle erforderlich ist und damit der Höhenaufbau der Funktionsteile des Axialfeldmotors keine Rolle spielt. Dadurch ist nicht nur die Gefahr von Überbestimmungen ausgeschlossen, die zu erheblichen Reibungsverlusten oder sehr hohen Genauigkeitsanforderungen mit sehr engen Toleranzen führt, sondern der Axialfeldmotor ist auch ohne Gehäuse voll funktionsfähig und kann daher bereits in diesem Zustand vorgeprüft und eingestellt werden.

Vorzugsweise sind die radialen Stege am Umfang des Axialfeldmotors abgestützt und weisen radial gerichtete Endrippen auf, die in axialer Richtung mit dem Gehäuse des Axialfeldmotors oder der Antriebsvorrichtung verbindbar sind, indem sie vorzugsweise in Formschlusselemente des Gehäuses eingreifen.

Weiterhin können sich axial erstreckende Formschlussbereiche der radialen Stege in Ausnehmungen des Gehäuses eingreifen.

Zur Bildung der virtuellen Achse und Abstützung der Motorwelle am Umfang des Axialfeldmotors sind die radialen Stege als Teil eines Trägerelements ausgebildet und stehen von einem die Motorwelle aufnehmenden Grundkörper ab. Durch diese Konfiguration der Motorwellenlagerung kann der Trägerkörper über die am Umfang verteilten, vom Grundkörper des Trägerelements abstehenden radial gerichteten Endrippen in ein Antriebsgehäuse eingefügt werden, wobei die Funktionsfähigkeit des Axialfeldmotors aber nicht von der Verbindung mit einem Antriebsgehäuse abhängt.

Eine in den Grundkörper des Trägerelements integrierte Lagerbuchse zur Aufnahme der Motorwelle kann entweder als Teil des Grundkörpers des Trägerelements ausgebildet sein oder in eine entsprechende Aufnahme des Grundkörpers des Trägerelements eingesetzt werden. In der zweiten Variante dient ein freistehender, an einer Stirnfläche des Trägerelements anliegender Außenbund der Lagerbuchse zur Lagefixierung der Lagerbuchse innerhalb des Trägerelements.

Vorzugsweise ist das Trägerelement Teil des Stators des Axialfeldmotor, d. h. durch die Integration elektromagnetischer Bauelemente in das Trägerelement wird die Funktion des Trägerelements über eine statische Funktion hinaus erweitert, so dass sowohl die Teilezahl als auch der Fertigungsaufwand reduziert werden.

Die Verbindung des Trägerelements und damit des Stators mit einem Gehäuse des Axialfeldmotors oder einem sowohl den Axialfeldmotor als auch ein Getriebe der Antriebsvorrichtung aufnehmenden Gehäuses dienen die radial gerichtete Endrippen der radialen Stege, die vorzugsweise elastisch am Gehäuse des Axialfeldmotor oder der Antriebsvorrichtung abgestützt sind. Zwischen den radial gerichtete Endrippen und dem Gehäuse des Axialfeldmotors oder der Antriebsvorrichtung kann ein zumindest in axialer Richtung elastischer Ring angeordnet werden kann, der Toleranzen der beiden Gehäusehälften eines zweiteiligen Gehäuses aufnimmt und eine axial spielfreie Montage ermöglicht.

Zur Bildung des Axialfeldmotors ist die Motorwelle mit mindestens einer an einer Stirnfläche des Stators angeordneten Läuferscheibe verbunden, während die andere Stirnfläche des Stators einen magnetischen Rückschluss ausbildet. Vorzugsweise ist die Motorwelle jedoch mit an beiden Stirnflächen des Stators angeordneten Läuferscheiben verbunden, auf denen dem Stator zugewandte Permanentmagnete mit in Umfangsrichtung abwechselnder Polung angeordnet sind.

Abtriebsseitig ist die Motorwelle mit einem Ritzel des als Stirnradgetriebe ausgebildeten Getriebes der Antriebsvorrichtung verbunden. Das Stirnradgetriebe weist ein mit dem Ritzel kämmendes Zahnrad einer ersten Getriebestufe auf, das koaxial mit einem zweiten Ritzel einer zweiten Getriebestufe verbunden ist, die mit einem mit dem Antriebselement der Verstelleinrichtung verbundenen zweiten Zahnrad kämmt.

Die Antriebsvorrichtung ist vorzugsweise in einem zweischaligen Gehäuse angeordnet, dessen eine Gehäuseschale über den elastischen Ring mit den radial gerichteten Endrippen des Trägerelements verbunden ist. Weiterhin weist die den elastischen Ring aufnehmende Gehäuseschale Befestigungen auf, mit der die Antriebsvorrichtung mit einer Aufnahmeeinrichtung verbindbar ist.

Insgesamt zeichnet sich die erfindungsgemäße Antriebsvorrichtung in Folge der konstruktiven Besonderheiten des Axialfeldmotors durch eine einfache, große Toleranzen der einzelnen Bauteile zulassende Montage aus, bei der keine Rücksicht auf eine mögliche Verspannung des Axialfeldmotor genommen werden muss. Neben dadurch bedingten geringen Reibungsverlusten zeichnet sich die Antriebsvorrichtung durch den Entfall störender Geräusche aus.

Anhand eines in der Zeichnung dargestellten Ausführungsbeispiels soll der der Erfindung zugrunde liegende Gedanke näher erläutert werden. Es zeigen:
- Fig. 1: einen Längsschnitt durch die erfindungsgemäße Antriebsvorrichtung mit einem Axialfeldmotor und einem Stirnradgetriebe;
- Fig. 2: eine Explosionsdarstellung des Axialfeldmotors mit einem Stator, zwei Läuferscheiben, einer Lagerbuchse zur Aufnahme der Motorwelle und einer Schlingfederbremse;
- Fig. 3: eine schematisch-perspektivische Darstellung des Trägerelements mit einem einzusetzenden Spulenkörper;
- Fig. 4: eine schematisch-perspektivische Darstellung des Trägerelements mit axial gerichteten Formschlusselementen und einem schematisch dargestellten gehäuseseitigen Gegenformschlusselement;
- Fig. 5: eine Draufsicht auf das Trägerelement;
- Fig. 6 und 7: zwei unterschiedliche perspektivische Ansichten der Antriebsvorrichtung mit Axialfeldmotor und Stirnradgetriebe und einer Seilwickelrolle eines Seilfensterhebers;
- Fig. 8: eine Draufsicht auf die Antriebsvorrichtung gemäß den Fig. 6 und 7 und
- Fig. 9: eine perspektivische Ansicht des Gehäuses der Antriebsvorrichtung mit darin enthaltenem Axialfeldmotor und Stirnradgetriebe.

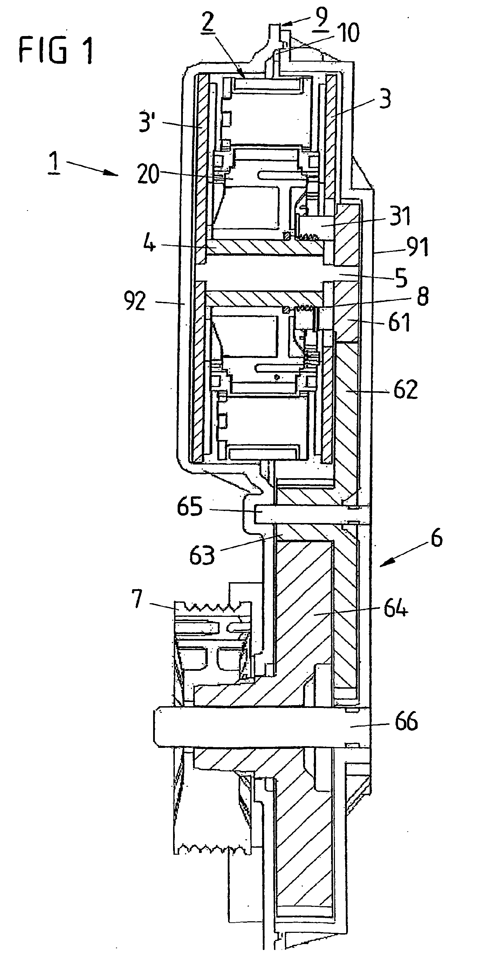

Fig. 1 zeigt einen Längsschnitt durch eine Antriebsvorrichtung für eine Verstelleinrichtung in einem Kraftfahrzeug, beispielsweise für einen Seilfensterheber zum Heben und Senken einer Fensterscheibe in einer Kraftfahrzeugtür. Die Antriebsvorrichtung enthält in einem aus zwei Gehäuseschalen 91, 92 zusammengesetzten Gehäuse 9 einen Axialfeldmotor 1 mit einem Stator 2 und zu beiden Stirnseiten des Stators 2 angeordneten Läuferscheiben 3, 3', ein als Stirnradgetriebe ausgebildetes Getriebe 6 und ein Antriebselement der Verstelleinrichtung in Form einer Seilwickelrolle 7. Wie der Schnittdarstellung gemäß Fig. 1 zu entnehmen ist, zeichnet sich die Antriebsvorrichtung insbesondere durch eine, flache Bauweise aus, die durch die Bauform des Axialfeldmotors 1 sowie durch Verwendung eines Stirnradgetriebes 6 und den in axialer Richtung geschachtelten Aufbau der Funktionselemente der Antriebsvorrichtung bedingt ist. Dabei wird trotz des in axialer Richtung minimal gehaltenen Aufbaus eine verspannungsfreie Konstruktion ohne Überbestimmungen gewährleistet, deren wesentliche Merkmale nachfolgend verdeutlicht werden sollen.

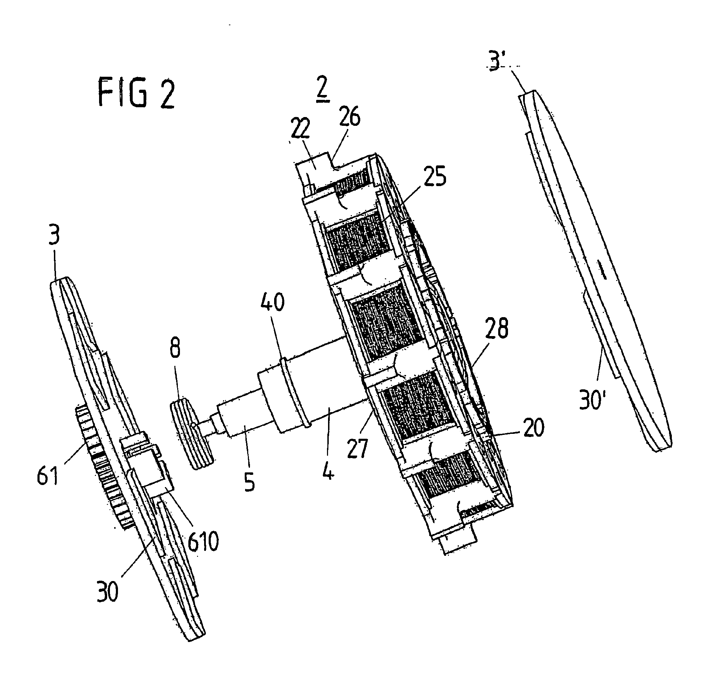

Der Axialfeldmotor 1 setzt sich gemäß den Fig. 1 und 2 aus einem Stator 2 und zwei zu beiden Seiten der Stirnflächen 27, 28 des Stators 2 angeordneten Läuferscheiben 3, 3' zusammen. Die eine Läuferscheibe 3 ist mit einem Ritzel 61 verbunden, das den Ausgang des Axialfeldmotors 1 und den Eingang des Stirnradgetriebes 6 bildet. Die Läuferscheiben 3, 3' sind mit einer Motorwelle 5 verbunden, die in einer Lagerbuchse 4 gelagert ist, die nicht axial, sondern über ein sternförmiges Trägerelement 20 abgestützt ist, das gleichzeitig den mechanischen Grundkörper des Stators 2 des Axialfeldmotors 1 bildet.

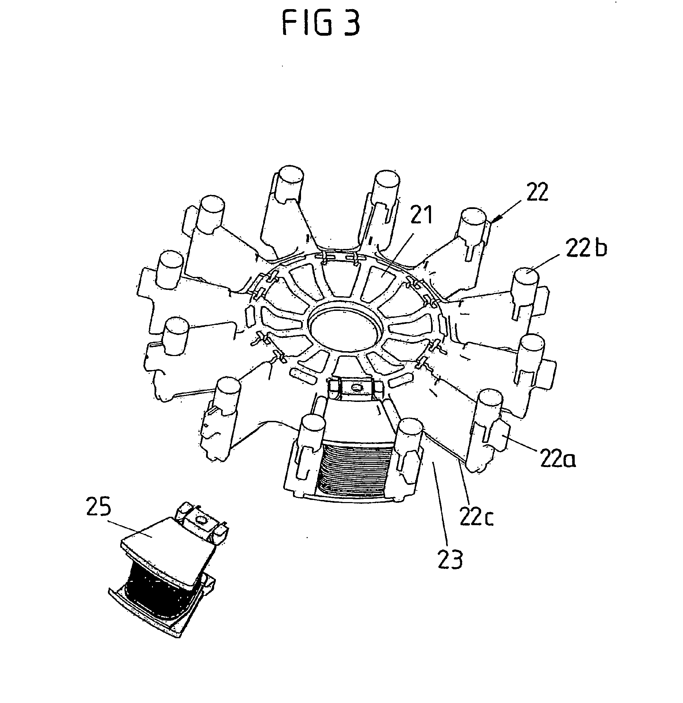

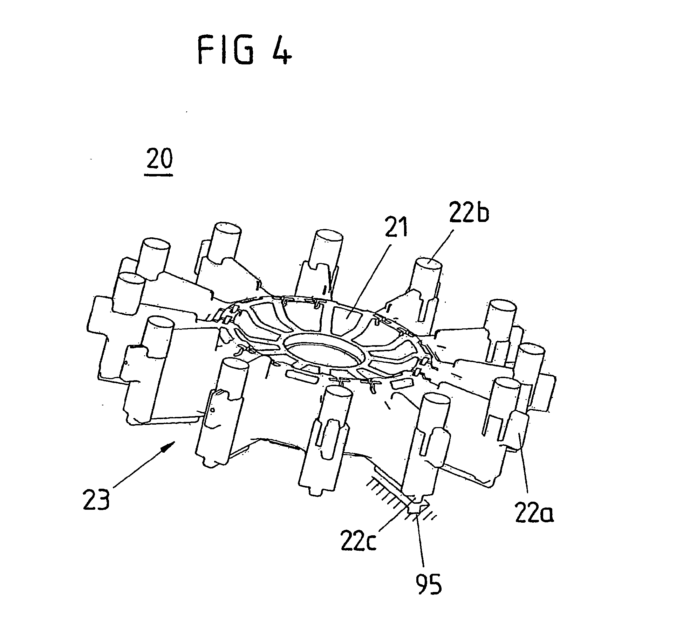

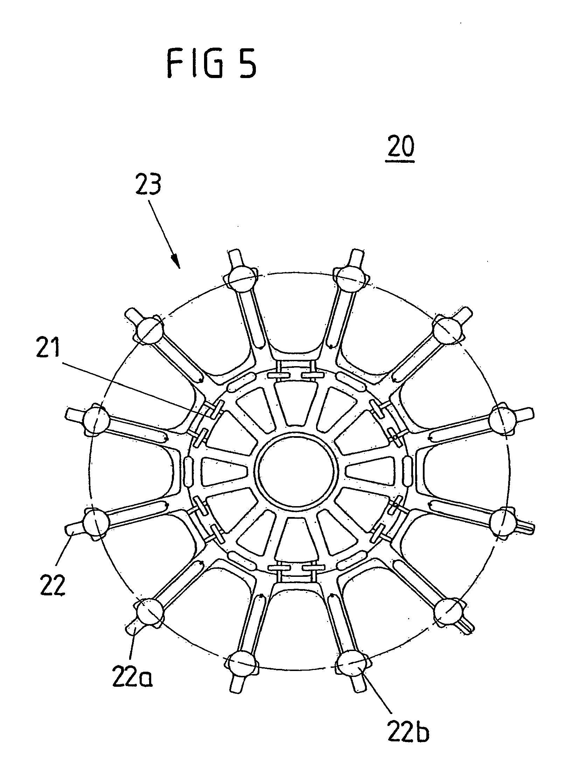

Wie den perspektivischen Darstellungen der Fig. 3 und 4 sowie der Draufsicht gemäß Fig. 5 zu entnehmen ist, besteht das Trägerelement 20 aus einem Grundkörper 21, von dem radial eine Vielzahl von Stegen 22 absteht, zwischen denen Einschübe 23 zur Aufnahme von Spulenkörpern 25 gebildet werden, die durch paarweise wechselnde Wicklungsanschlüsse jeweils zwei Nord- und zwei Südpole ausbilden, so dass jeweils zwei Nordpolen zwei Südpole folgen. Mittig weist der Grundkörper 21 eine zylinderförmige Öffnung oder Bohrung auf, die entweder als Lagerbuchse zur Aufnahme der Motorwelle 5 ausgebildet ist oder in die eine Lagerbuchse 4 gemäß den Fig. 1 und 2 einsetzbar ist, in der die Motorwelle 5 gelagert ist. Hierzu weist die Lagerbuchse 4 einen freistehenden Außenbund 40 auf, der an der einen Stirnseite 26 des Trägerelements 20 anliegt und damit die Lage der Lagerbuchse 4 fixiert.

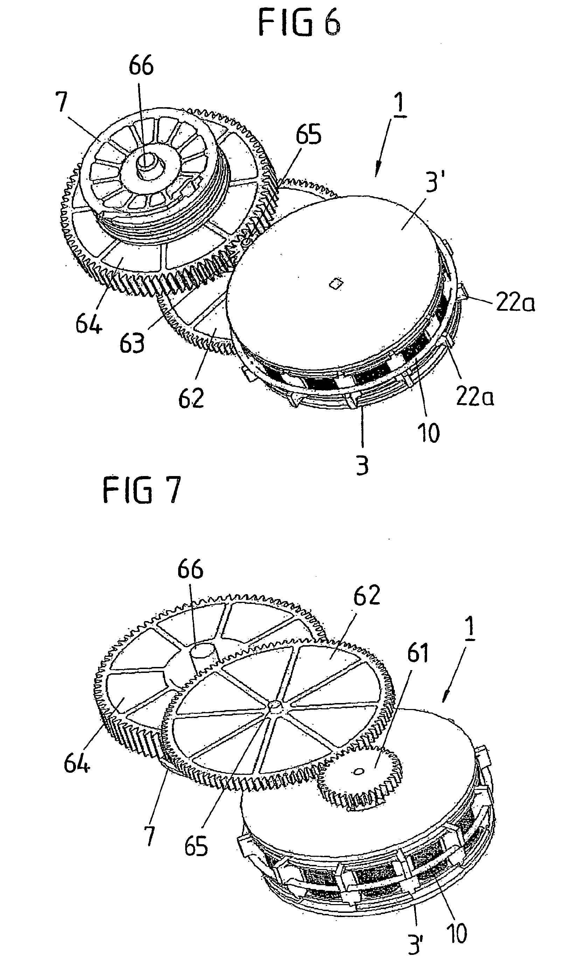

Die radialen Stege 22 weisen an ihren äußeren Enden radial gerichtete Formschlusselemente in Form von radial gerichteten Endrippen 22a auf, die vorzugsweise über einen elastischen Ring 10 - wie nachstehend anhand der Figuren 6 und 7 erläutert wird - in Formschlussbereiche des Gehäuses 9 des Axialfeldmotors oder der Antriebsvorrichtung eingreifen. Weiterhin sind axial gerichtete Formschlusselemente in Form von Vorsprüngen 22b und sich über die Länge der radialen Stege 22 erstreckenden Stegen 22c vorgesehen, die zusammen mit den radial gerichteten Endrippen 22a die von der Motorwelle 5 ausgehenden radialen Kräfte in das Gehäuse 9 einleiten.

Die Gegenformschlusselemente des Gehäuses 9 sind entsprechend als Ausnehmungen ausgebildet und nehmen mit ihren Anschlagflächen die Motorkräfte auf.

Während die axial gerichteten Vorsprünge 22b in entsprechende Ausnehmungen eines Gehäusebodens eingreifen, sind den Stegen 22c entsprechende Ausnehmungen 95 der Bodenkontur des Gehäuses 9 zugeordnet, deren Enden zur radialen Führung des Trägerelements 20 vorzugsweise geschlossen sind.

Die Läuferscheiben 3, 3' stehen den Stirnseiten 26, 27 des Trägerelements 20 unter Ausbildung geringer Luftspalte gegenüber und weisen Permanentmagnete 30, 30' mit in Umfangsrichtung wechselnder Polung auf, die den magnetischen Rückschluss für das Magnetfeld der Spulen des Stators 2 bilden.

Wie insbesondere der Schnittdarstellung gemäß Fig. 1 zu entnehmen ist, ist die Motorwelle 5 ausschließlich über die Lagerbuchse 4 und das Trägerelement 20 am Umfang der Antriebsvorrichtung abgestützt, d. h. es besteht keine axiale Abstützung der Motorwelle 5 in Bezug auf das Gehäuse 9, sondern lediglich eine Abstützung über den Umfang des Gehäuses 9.

Damit ist der Axialfeldmotor 1 ein vom Gehäuse 9 der Antriebsvorrichtung unabhängiges Funktionsteil, dessen Funktionen ohne das Gehäuse 9 und auch ohne das Getriebe 6 in seiner Funktion geprüft und dessen Funktionsteile gegebenenfalls korrigiert oder ausgetauscht werden können. Die Verbindung des Axialfeldmotors 1 mit dem Gehäuse 9 der Antriebsvorrichtung erfolgt über einen elastischen Ring 10, der gemäß Fig. 6 auf die radial gerichteten Endrippen 22a der radialen Stege 22 des Trägerelements 20 aufgelegt wird und der sich gemäß Fig. 1 an der einen Gehäuseschale 91 des zweischaligen Gehäuses 9 abstützt. Durch den elastischen Ring 10 können in axialer Richtung auftretende Toleranzen des axialen Aufbaus des Axialfeldmotors 1 und der Dimensionierung des Gehäuses 9 der Antriebsvorrichtung ausgeglichen werden und damit eine verspannungsfreie Montage unter Berücksichtigung großer Toleranzen gewährleistet werden.

Um Rückwirkungen seitens der von der Antriebsvorrichtung angetriebenen Verstelleinrichtung zu vermeiden, d. h. eine unbeabsichtigte Verstellung der Verstelleinrichtung bei einem Verstellmoment zu verhindern, das größer ist als das Antriebsmoment der Antriebsvorrichtung, wird eine Bremseinrichtung vorgesehen, die eine Selbsthemmung der Antriebsvorrichtung bei einem Drehmoment der Verstelleinrichtung gewährleistet, die das Antriebsmoment der Antriebsvorrichtung übersteigt. Zu diesem Zweck und zur Schaffung einer möglichst flachen Antriebsvorrichtung weist der in Fig. 2 dargestellte Doppel-Axialfeldmotor eine Bremsvorrichtung in Form einer Schlingfederbremse mit einer Schlingfeder 8 auf, die zwischen der Läuferscheibe 3 und einem mit der Läuferscheibe 3 verbundenen Ritzel 61 eines abtriebsseitig vorgesehenen Getriebes angeordnet ist und die unter Vorspannung an der Außenwand der feststehenden Lagerbuchse 4 anliegt, in der die Motorwelle 5 drehbar gelagert ist.

Die Betätigung der Schlingfeder 8 erfolgt über ihre radial nach außen abstehenden Federenden, die einander radial gegenüber liegen. Im Ruhezustand bzw. stromlosen Zustand wird die Schlingfeder 8 beim Anliegen eines von der Abtriebseite her eingeleiteten Drehmomentes mittels des Ritzels 61 in beiden Drehrichtungen über eines ihrer Federenden derart betätigt, dass sie am äußeren Rand der Lagerbuchse 4 festgeklemmt wird. Hierzu stehen entsprechend der perspektivischen Darstellung gemäß Fig. 2 von dem Ritzel 61 entsprechende Fortsätze oder Schaltklauen 610 nach unten ab, die mit jeweils einem der Federenden der Schlingfeder 8 zusammenwirken. Hierdurch wird beim Vorliegen eines abtriebsseitigen Drehmomentes die Schlingfederbremse verriegelt und eine Drehbewegung aufgrund von deren Klemmwirkung verhindert.

Die Schaltklauen 610 des Ritzels 61 wirken bei einem abtriebsseitigen Drehmoment zum Verriegeln der Schlingfederbremse auf die Enden der Schlingfeder 12 ein, um diese zusammenzuziehen, also klemmend an die Außenwand der Lagerbuchse 10 anzulegen.

Jedem der beiden Federenden der Schlingfeder 8 ist außerdem ein Schaltbereich der Läuferscheibe 3 zugeordnet, die die Schlingfederbremse löst, d.h. die Schlingfeder 8 freischaltet, wenn der Axialfeldmotor 2 bestromt wird. In beiden Drehrichtungen des Läuferscheibe 3 wirkt der eine oder andere Schaltbereich auf das zugeordnete Federende der Schlingfeder 8 ein, um diese soweit von der Außenwand der Lagerbuchse 4 abzuheben, dass sie einer Drehbewegung nicht mehr entgegenwirkt und nur möglichst geringe Wirkungsgradverluste beim Betrieb des Axialfeldmotors 2 auftreten.

Weitere Einzelheiten zum Aufbau und zur Funktion der Schlingfederbremse sind der deutschen Patentanmeldung 102 36 372.2 zu entnehmen, auf deren Inhalt Bezug genommen wird.

Das Getriebe der Antriebsvorrichtung besteht gemäß den Fig. 1 und 6 bis 8 aus einem Stirnradgetriebe 6, dessen erste Getriebestufe das mit der Motorwelle 5 verbundene Ritzel 61 enthält, das mit einem auf einer Achse 65 gelagerten Zahnrad 62 kämmt. Das koaxial zum Zahnrad 62 angeordnete Ritzel 63 einer zweiten Getriebestufe des Stirnradgetriebes 6 kämmt mit einem um eine Achse 66 der zweiten Getriebestufe drehenden Zahnrad 64, das wiederum mit dem Antriebselement 7 der von der Antriebsvorrichtung angetriebenen Verstelleinrichtung gekoppelt ist, das in dem hier dargestellten Ausführungsbeispiel aus einer Seilwickelrolle 7 für einen Seilfensterheber besteht.

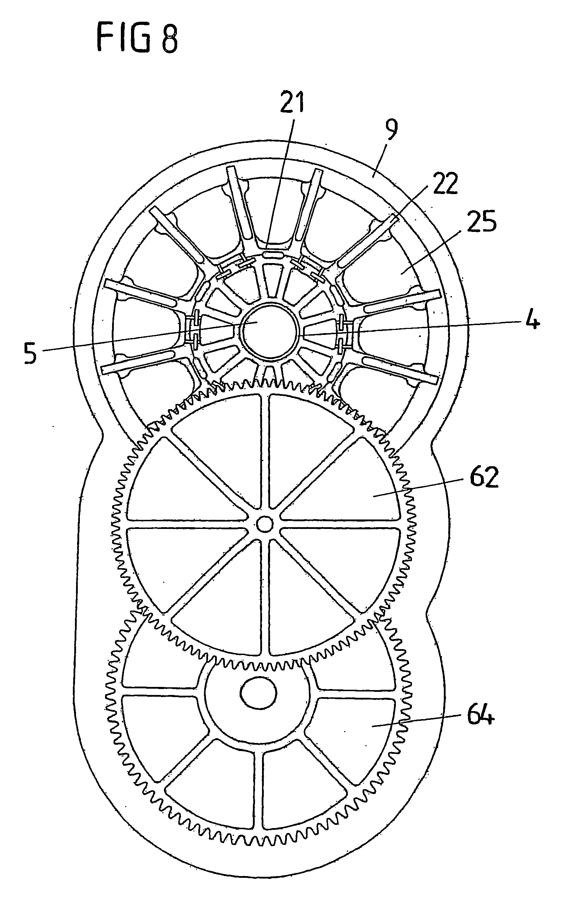

Die Fig. 6 und 7 zeigen die verschiedenen perspektivischen Ansichten des Axialfeldmotors und des Stirnradgetriebes sowie Fig. 8 eine Draufsicht auf die in dem Gehäuse 9 angeordneten Funktionsteile der Antriebsvorrichtung, wobei diese Draufsicht die umfangsseitige Abstützung der Motorwelle 5 verdeutlicht.

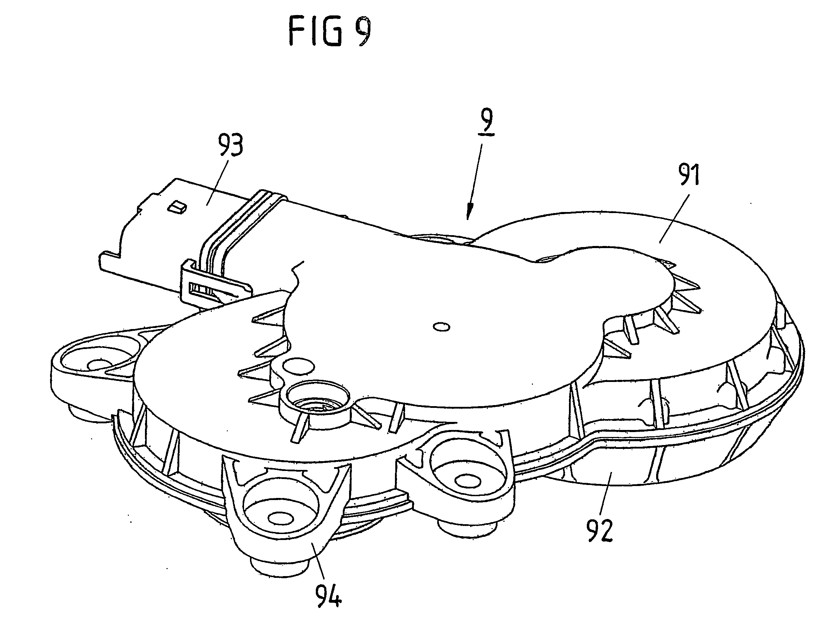

Fig. 9 zeigt in einer perspektivischen Ansicht das die Antriebsvorrichtung einfassende Gehäuse 9, das sich aus zwei Gehäuseschalen 91, 92 wie vorstehend beschrieben zusammensetzt. Über eine Steckerverbindung 93 ist die Antriebsvorrichtung mit einer Stromversorgung und/oder einer Steuer- bzw. Regeleinrichtung elektrisch verbindbar, während die mechanische Verbindung der Antriebsvorrichtung mit einer Aufnahmevorrichtung über Befestigungselemente 94 erfolgt, die an der einen Gehäuseschale 91 angeordnet sind.

### Bezugszeichenliste

- 1: Axialfeldmotor
- 2: Stator
- 3, 3': Läuferscheiben
- 4: Lagerbuchse
- 5: Motorwelle
- 6: Stirnradgetriebe
- 7: Seilwickelrolle
- 8: Schlingfeder
- 9: Gehäuse
- 10: Elastischer Ring
- 20: Trägerelement
- 21: Grundkörper
- 22: Radiale Stege
- 22a: Radial gerichtete Formschlusselemente (Endrippen)
- 22b, 22c: Axial gerichtete Formschlusselemente (Vorsprünge, Stege)
- 23: Einschübe
- 24: Öffnung oder Bohrung
- 25: Spulenwicklung
- 26,27: Stirnflächen
- 30, 30': Permanentmagnete
- 61, 63: Ritzel
- 62, 64: Zahnrad
- 65,66: Achse
- 91, 92: Gehäuseschalen
- 93: Steckerverbindung
- 94: Befestigungselemente

## Patentansprüche

1. Antriebsvorrichtung für Verstelleinrichtungen in Kraftfahrzeugen mit einem Axialfeldmotor und einem Getriebe, das mit der Motorwelle und einem Antriebselement der Verstelleinrichtung verbunden ist,
**dadurch gekennzeichnet,**
**dass** die von der Motorwelle (5) ausgehenden radialen Kräfte über sich axial erstreckende Formschlussbereiche (22a - 22c) radialer Stege (22) in das Gehäuse (9) der Antriebsvorrichtung oder des Axialfeldmotors (1) eingeleitet werden, wobei die radialen Stege (22) Teil eines Trägerelements (20) sind und radial von einem Grundkörper (21) des Trägerelements (20) abstehen, in den eine Lagerbuchse (4) zur Aufnahme der Motorwelle (5) integriert ist.

2. Antriebsvorrichtung nach Anspruch 1, **dadurch gekennzeichnet, dass** die radialen Stege (22) am Umfang des Axialfeldmotors (1) abgestützt sind

3. Antriebsvorrichtung nach Anspruch 1 oder 2, **dadurch gekennzeichnet, dass** radial gerichtete Endrippen (22a) der Stege (22) in Formschlusselemente des Gehäuses (9) des Axialfeldmotors (1) oder der Antriebsvorrichtung eingreifen.

4. Antriebsvorrichtung nach Anspruch 3, **dadurch gekennzeichnet, dass** die radial gerichteten Endrippen (22a) der Stege (22) in axialer Richtung mit dem Gehäuse (9) verbindbar sind.

5. Antriebsvorrichtung nach Anspruch 1 oder 2, **dadurch gekennzeichnet, dass** sich axial erstreckende Formschlussbereiche (22b, 22c) der radialen Stege (22) in Ausnehmungen (95) des Gehäuses (9) eingreifen.

6. Antriebsvorrichtung nach mindestens einem der voranstehenden Ansprüche, **dadurch gekennzeichnet, dass** die Lagerbuchse (4) Teil des Grundkörpers (21) des Trägerelements (20) ist.

7. Antriebsvorrichtung nach mindestens einem der voranstehenden Ansprüche, **dadurch gekennzeichnet, dass** die Lagerbuchse (4) in eine mittige Öffnung oder Bohrung (24) des Grundkörpers (21) des Trägerelements (20) eingesetzt ist.

8. Antriebsvorrichtung nach Anspruch 7, **dadurch gekennzeichnet, dass** ein freistehender Außenbund (40) der Lagerbuchse (4) an einer Stirnfläche (26) des Trägerelements (20) anliegt.

9. Antriebsvorrichtung nach mindestens einem der voranstehenden Ansprüche, **dadurch gekennzeichnet, dass** das Trägerelement (20) Teil des Stators (2) des Axialfeldmotors (1) ist.

10. Antriebsvorrichtung nach mindestens einem der voranstehenden Ansprüche, **dadurch gekennzeichnet, dass** zwischen den radial gerichteten Endrippen (22a) der Stege (22) des Trägerelements (20) und dem Gehäuse (9) des Axialfeldmotors (1) oder der Antriebsvorrichtung ein zumindest in axialer Richtung elastischer Ring (10) angeordnet ist.

11. Antriebsvorrichtung nach mindestens einem der voranstehenden Ansprüche, **dadurch gekennzeichnet, dass** die Motorwelle (5) mit an beiden Stirnflächen (26, 27) des Stators (2) angeordneten Läuferscheiben (3, 3') verbunden ist.

12. Antriebsvorrichtung nach mindestens einem der voranstehenden Ansprüche, **dadurch gekennzeichnet, dass** die Motorwelle (5) mit einem Ritzel (61) des als Stirnradgetriebe ausgebildeten Getriebes (6) verbunden ist.

13. Antriebsvorrichtung nach Anspruch 12, **dadurch gekennzeichnet, dass** das Stirnradgetriebe (6) ein mit dem Ritzel (61) kämmendes Zahnrad (62) einer ersten Getriebestufe aufweist, das koaxial mit einem zweiten Ritzel (63) einer zweiten Getriebestufe verbunden ist, die mit einem mit dem Antriebselement (7) der Verstelleinrichtung verbundenen zweiten Zahnrad (64) kämmt.

14. Antriebsvorrichtung nach mindestens einem der voranstehenden Ansprüche, **gekennzeichnet durch** ein zweischaliges Gehäuse (9), dessen eine Gehäuseschale (91) über den elastischen Ring (10) mit den radial gerichtete Endrippen (22a) der radialen Stege (22) des Trägerelements (20) verbunden ist.

15. Antriebsvorrichtung nach Anspruch 14, **dadurch gekennzeichnet, dass** die den elastischen Ring (10) aufnehmende Gehäuseschale (91) Befestigungen (94) aufweist, mit der die Antriebsvorrichtung mit einer Aufnahmevorrichtung verbindbar ist.

## Claims

1. Drive device for adjusting devices in motor vehicles having an axial field motor and a transmission which is connected to the motor shaft and a drive element of the adjusting device,
**characterized**
**in that** the radial forces originating from the motor shaft (5) are applied to the housing (9) of the drive device or of the axial field motor (1) via axially extending positively locking regions (22a-22c) of radial webs (22), wherein the radial webs (22) are part of a carrier element (20) and protrude radially from a base body (21) of the carrier element (20), into which base body (21) a bearing bushing (4) for holding the motor shaft (5) is integrated.

2. Drive device according to Claim 1, **characterized in that** the radial webs (22) are supported on the circumference of the axial field motor (1).

3. Drive device according to Claim 1 or 2, **characterized in that** radially directed end fins (22a) of the webs (22) engage in positively locking elements of the housing (9) of the axial field motor (1) or of the drive device.

4. Drive device according to Claim 3, **characterized in that** the radially directed end fins (22a) of the webs (22) can be connected to the housing (9) in the axial direction.

5. Drive device according to Claim 1 or 2, **characterized in that** axially extending positively locking regions (22b, 22c) of the radial webs (22) engage in recesses (95) in the housing (9).

6. Drive device according to at least one of the preceding claims, **characterized in that** the bearing bushing (4) is part of the base body (21) of the carrier element (20).

7. Drive device according to at least one of the preceding claims, **characterized in that** the bearing bushing (4) is inserted into a central opening or bore (24) in the base body (21) of the carrier element (20).

8. Drive device according to Claim 7, **characterized in that** a free-standing external collar (40) of the bearing bushing (4) bears against an end face (26) of the carrier element (20).

9. Drive device according to at least one of the preceding claims, **characterized in that** the carrier element (20) is part of the stator (2) of the axial field motor (1).

10. Drive device according to at least one of the preceding claims, **characterized in that** a ring (10) which is elastic at least in the axial direction is arranged between the radially directed end fins (22a) of the webs (22) of the carrier element (20) and the housing (9) of the axial field motor (1) or of the drive device.

11. Drive device according to at least one of the preceding claims, **characterized in that** the motor shaft (5) is connected to rotor plates (3, 3') which are arranged on both end faces (26, 27) of the stator (2).

12. Drive device according to at least one of the preceding claims, **characterized in that** the motor shaft (5) is connected to a pinion (61) of the gear mechanism (6) which is embodied as a spur gear mechanism.

13. Drive device according to Claim 12, **characterized in that** the spur gear mechanism (6) has a gearwheel (62), intermeshing with the pinion (61), of a first gear stage, which gearwheel (62) is connected coaxially to a second pinion (63) of a second gear stage which meshes with a second gearwheel (64) which is connected to a drive element (7) of the adjusting device.

14. Drive device according to at least one of the preceding claims, **characterized by** a two-shell housing (9), one housing shell (91) of which is connected via the elastic ring (10) to the radially directed end fins (22a) of the radial webs (22) of the carrier element (20).

15. Drive device according to Claim 14, **characterized in that** the housing shell (91) which holds the elastic ring (10) has fastenings (94) with which the drive device can be connected to the holding device.

## Revendications

1. Dispositif d'entraînement destiné aux dispositifs de réglage de véhicules automobiles, comprenant un moteur à champ axial et un engrenage qui est relié à l'arbre de moteur et à un élément d'entraînement du dispositif de réglage,
**caractérisé en ce que**
les forces radiales provenant de l'arbre de moteur (5) sont introduites par le biais de zones de liaison de forme (22a à 22c), s'étendant axialement, de tiges radiales (22) dans le logement (9) du dispositif d'entraînement ou du moteur à champ axial (1), les tiges radiales (22) constituant une partie d'un élément porteur (20) et faisant saillie radialement depuis un corps de base (21) de l'élément porteur (20), dans lequel un coussinet (4) est intégré aux fins de la réception de l'arbre de moteur (5).

2. Dispositif d'entraînement selon la revendication 1, **caractérisé en ce que** les tiges radiales (22) sont étayées au niveau de la circonférence du moteur à champ axial (1).

3. Dispositif d'entraînement selon la revendication 1 ou 2, **caractérisé en ce que** des nervures d'extrémité (22a), orientées radialement, des tiges (22) viennent en prise dans des éléments de liaison de forme du logement (9) du moteur à champ axial (1) ou du dispositif d'entraînement.

4. Dispositif d'entraînement selon la revendication 3, **caractérisé en ce que** les nervures d'extrémité (22a), orientées radialement, des tiges (22) peuvent être reliées au logement (9) dans la direction axiale.

5. Dispositif d'entraînement selon la revendication 1 ou 2, **caractérisé en ce que** des zones de liaison de forme (22b, 22c), s'étendant axialement, des tiges radiales (22) viennent en prise dans des évidements (95) du logement (9).

6. Dispositif d'entraînement selon au moins l'une quelconque des revendications précédentes, **caractérisé en ce que** le coussinet (4) constitue une partie du corps de base (21) de l'élément porteur (20).

7. Dispositif d'entraînement selon au moins l'une quelconque des revendications précédentes, **caractérisé en ce que** le coussinet (4) est installé dans une ouverture centrale ou un alésage (24) du corps de base (21) de l'élément porteur (20).

8. Dispositif d'entraînement selon la revendication 7, **caractérisé en ce qu'**un anneau extérieur (40) libre du coussinet (4) repose sur une face frontale (26) de l'élément porteur (20).

9. Dispositif d'entraînement selon au moins l'une quelconque des revendications précédentes, **caractérisé en ce que** l'élément porteur (20) constitue une partie du stator (2) du moteur à champ axial (1).

10. Dispositif d'entraînement selon au moins l'une quelconque des revendications précédentes, **caractérisé en ce que,** entre les nervures d'extrémité (22a), orientées radialement, des tiges (22) de l'élément porteur (20) et le logement (9) du moteur à champ axial (1) ou du dispositif d'entraînement, est disposée une bague (10) élastique au moins dans la direction axiale.

11. Dispositif d'entraînement selon au moins l'une quelconque des revendications précédentes, **caractérisé en ce que** l'arbre de moteur (5) est relié à des disques de rotor (3, 3') disposés sur les deux faces frontales (26, 27) du stator (2).

12. Dispositif d'entraînement selon au moins l'une quelconque des revendications précédentes, **caractérisé en ce que** l'arbre de moteur (5) est relié à un pignon (61) de l'engrenage (6) réalisé sous forme d'un engrenage cylindrique.

13. Dispositif d'entraînement selon la revendication 12, **caractérisé en ce que** l'engrenage cylindrique (6) comprend une roue dentée (62), en engrenage avec le pignon (61), d'un premier étage de transmission, laquelle est reliée coaxialement à un second pignon (63) d'un second étage de transmission qui engrène avec une seconde roue dentée (64) reliée à l'élément d'entraînement (7) du dispositif de réglage.

14. Dispositif d'entraînement selon au moins l'une quelconque des revendications précédentes, **caractérisé par** un logement (9) à double paroi dont une paroi de logement (91) est reliée aux nervures d'extrémité (22a), orientées radialement, des tiges radiales (22) de l'élément porteur (20) par le biais de la bague élastique (10).

15. Dispositif d'entraînement selon la revendication 14, **caractérisé en ce que** la paroi de logement (91) recevant la bague élastique (10) comprend des fixations (94), grâce auxquelles le dispositif d'entraînement peut être relié à un dispositif de réception.
